# EUROPEAN PATENT SPECIFICATION

(11) **EP 2 159 143 B1**
(45) Date of publication and mention of the grant of the patent: **02.01.2013**
(21) Application number: 09251692.1
(22) Date of filing: 01.07.2009
(51) Int. Cl.: B62J 37/00, B62K 11/04, F02M 69/04

(54) **Motorcycle**
Motorrad
Motocyclette

(30) Priority: 29.08.2008 JP 2008221166
(43) Date of publication of application: 03.03.2010
(73) Proprietor: HONDA MOTOR CO., LTD., Tokyo (JP)
(72) Inventor: Isomura, Mamoru, Wako-shi Saitama 351-0193 (JP); Inoue, Takashi, Wako-shi Saitama 351-0193 (JP); Yoshimura, Yuki, Wako-shi Saitama 351-0193 (JP)
(74) Representative: Stevens, Jason Paul

(56) References cited:
- EP-A1- 1 609 969
- EP-A2- 1 340 905
- EP-A2- 1 752 368
- JP-A- 2004 231 028
- JP-A- 2008 143 317
- US-A1- 2006 054 375

## Description

The present invention relates to a motorcycle, and in particular to the arrangement in the motorcycle of an injector, a fuel pump, and a control unit for controlling the injector and the fuel pump.

A motorcycle in which a fuel pump and a throttle body having an injector are juxtaposed in the vehicle width direction across a main frame is already known (see, for example, JP-A No. 2008-143317).

In the motorcycle disclosed in JP-A No. 2008-143317, since the throttle body and the fuel pump are juxtaposed in the vehicle width direction across the main frame, the injector of the throttle body and the fuel pump can be disposed in close proximity to each other, and so the fuel piping for connecting the injector and the fuel pump can be advantageously shortened. However, even though the injector and the fuel pump are disposed in proximity to each other, if a control unit (ECU) for controlling these components is disposed away from them, wiring for connecting the control unit to the injector and the fuel pump is lengthened, thus increasing vehicle manufacturing cost and body weight.

Other arrangements of fuel pumps in motorcycles and similar vehicles are disclosed in EP 1340905, EP 1752368, EP 1609969 and JP 2004-231028.

The present invention has been made in view of the above-mentioned circumstances, and it is an object of at least the preferred embodiments of the Invention to provide a motorcycle that enables reduction in vehicle manufacturing cost and body weight by shortening the fuel piping for connecting the injector and the fuel pump and by shortening the wiring for connecting the control unit to the injector and the fuel pump.

According to a first aspect of the present invention, there is provided a motorcycle comprising a main frame.extending rearward and downward from a head pipe, wherein the main frame is provided along a body centreline of the motorcycle, which passes through the centre in the direction of width of the motorcycle and extends in the longitudinal direction of the motorcycle body; an engine supported on the main frame; a throttle body connected to a rear portion of the engine and having an injector for injecting fuel into an intake passage; a fuel pump provided outside a fuel tank; and an air cleaner connected through a connecting tube to a rear portion of the throttle body; characterized in that it further comprises a control unit for controlling the injector and the fuel pump, wherein the injector, the fuel pump, and the control unit are disposed around the main frame in such a manner as to surround the main frame; and wherein the control unit is disposed on an opposite side of the main frame to the connecting tube in the direction of the width of the vehicle.

Since the injector, the fuel pump, and the control unit are disposed around the main frame in such a manner as to surround the main frame, the fuel piping for connecting the injector and the fuel pump can be shortened, and the wiring for connecting the control unit to the injector and the fuel pump can be shortened, thus enabling reduction in vehicle manufacturing cost and body weight.

Further, with this arrangement, the control unit and the connecting tube can be disposed compactly around the main frame. If the control unit is disposed on the same side as the connecting tube, the control unit or the connecting tube is then disposed far from the main frame in the direction of width of the vehicle, thus increasing vehicle width.

In a preferred form, the fuel pump has a discharge portion for discharging fuel to the injector which protrudes from the fuel pump in a particular direction; and the control unit is disposed in plan view along the direction in which the discharge portion protrudes from the fuel pump and in a position lower than the discharge portion.

With this arrangement, the fuel pump and the control unit can be disposed in close proximity to each other while the control unit is provided in the direction in which the discharge portion protrudes.

Preferably, the injector, the fuel pump, and the control unit are disposed distributedly to right and left of the body centreline of the motorcycle across the main frame.

Since the injector, the fuel pump, and the control unit are disposed distributedly to right and left across the main frame, the fuel piping for connecting the injector and the fuel pump can be shortened, and the wiring for connecting the control unit to the injector and the fuel pump can be shortened, thus enabling reduction in vehicle manufacturing cost and body weight.

Preferred embodiments of the invention will now be described by way of example only and with reference to the accompanying drawings, in which:
Fig. 1 is a left side view of a first embodiment of the motorcycle according to the present invention;
Fig. 2 is an enlarged plan view of the periphery of the throttle body, the fuel pump, and the control unit shown in Fig. 1;
Fig. 3 is an enlarged side view of the periphery of the throttle body, the fuel pump, and the control unit shown in Fig. 1;
Fig. 4 is a perspective view, as seen from the front left, of the periphery of the throttle body, the fuel pump, and the control unit shown in Fig. 1;
Fig. 5 is a perspective view, as seen from the rear left, of the periphery of the throttle body, the fuel pump, and the control unit shown in Fig. 1;
Fig. 6 is a perspective view, as seen from the rear left, of the periphery of the air cleaner stay shown in Fig. 5; and
Fig. 7 is an enlarged main-portion plan view of a second embodiment of the motorcycle according to the present invention.

Hereinbelow, embodiments of a motorcycle according to the present invention will be described in detail with reference to the drawings. The drawings are to be seen from the direction of reference numerals. In the following descriptions, front/rear, left/right and up/down are as viewed by a rider, and, in the drawings, the front, rear, left, right, up, and down with respect to the vehicle are denoted by Fr, Rr, L, R, U, and D respectively.

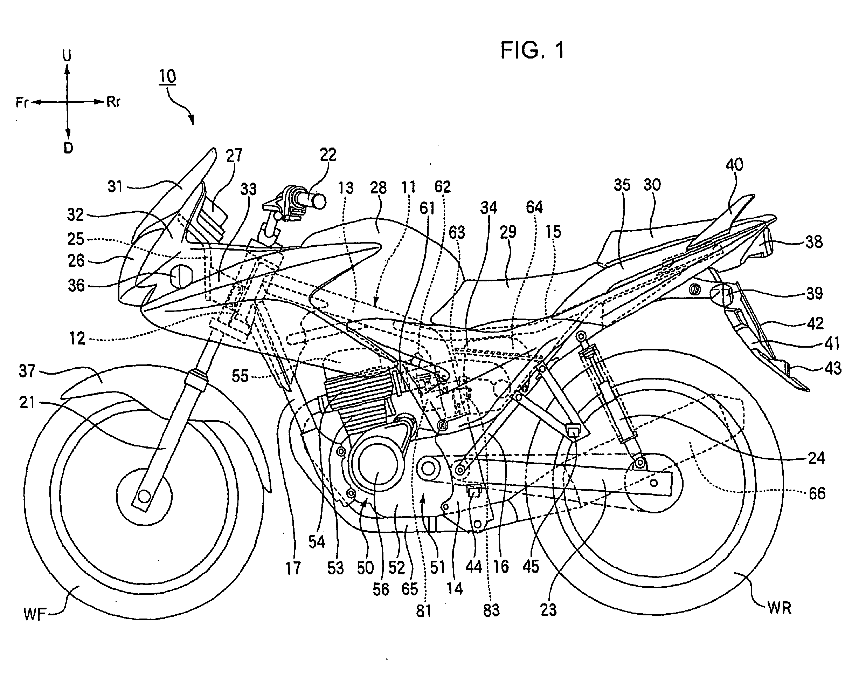

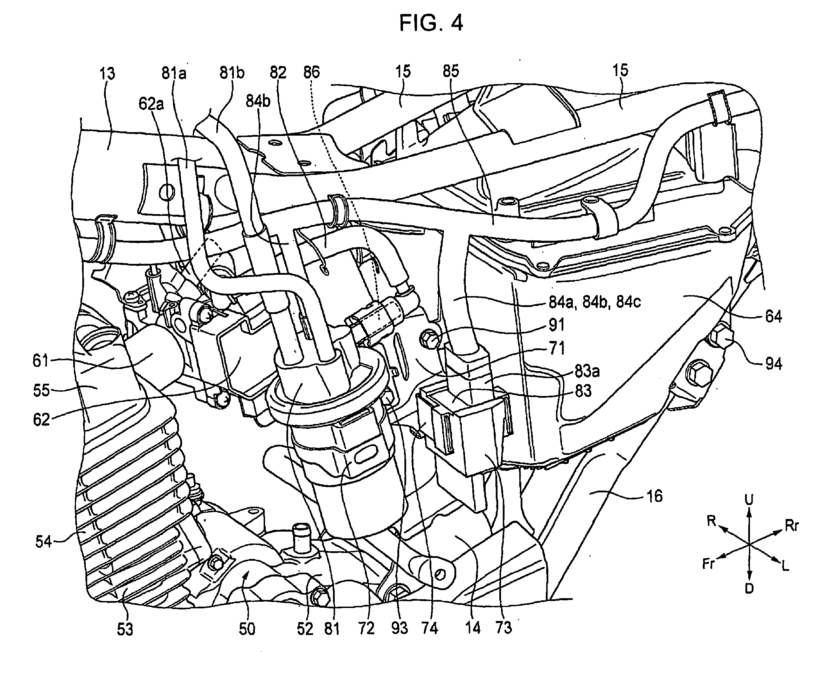

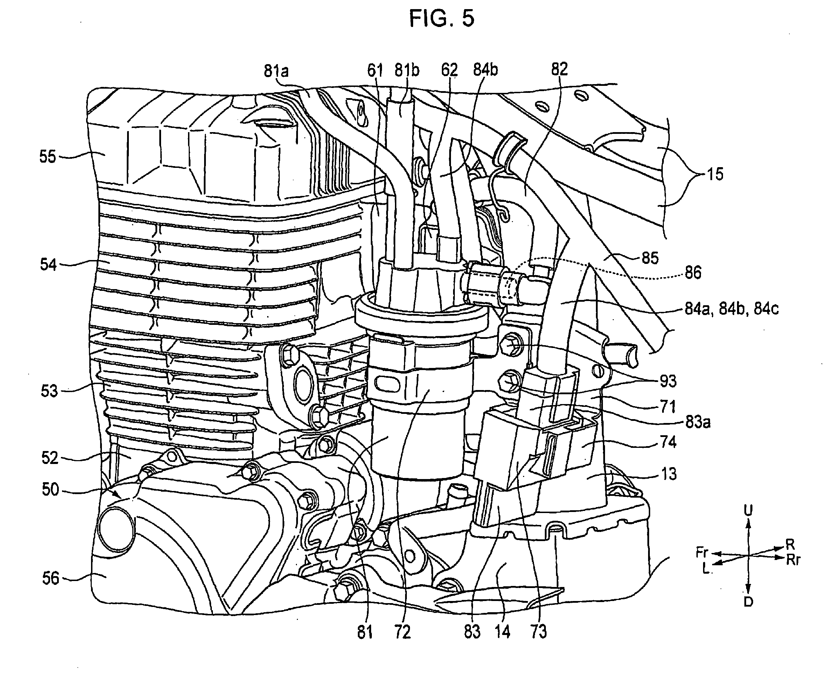

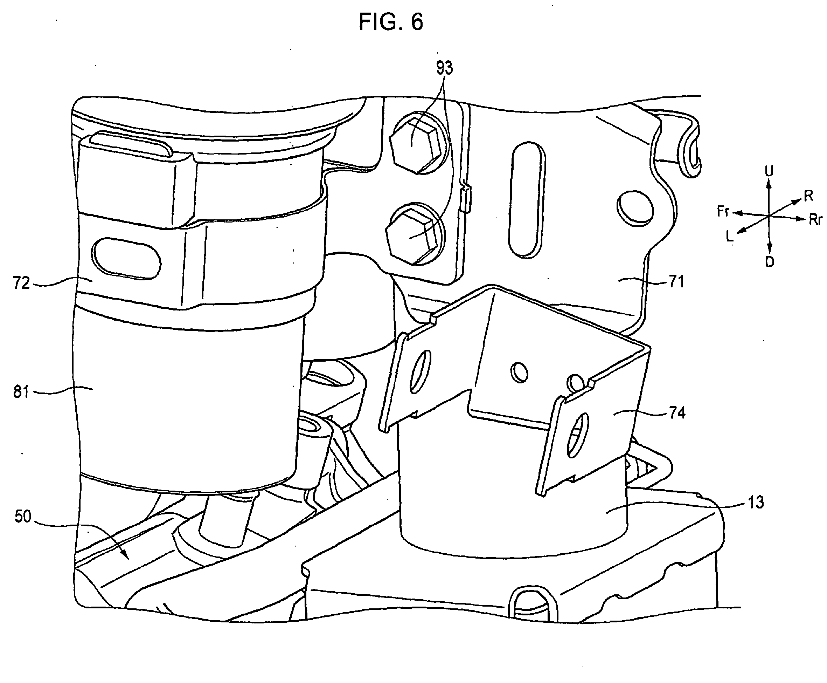

Referring to Figs. 1 to 6, a first embodiment of the motorcycle according to the present invention will be described.

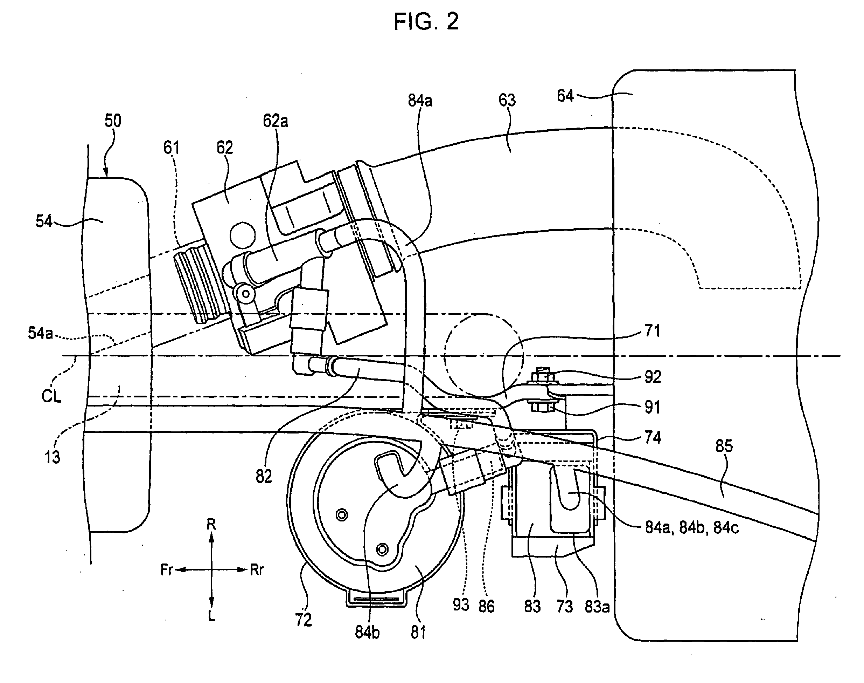

In the motorcycle 10 according to the first embodiment, as shown in Figs. 1 and 2, a body frame 11 includes: a head pipe 12 provided at a front end; a main frame 13 provided along a body centre line CL, which passes through the centre direction of width of the vehicle and extends in the longitudinal direction of the vehicle body, and extending rearward and downward, from the head pipe 12; pivot plates 14 connected to a rear end portion of the main frame 13; a pair of right and left seat frames 15 connected to a middle portion of the main frame 13 and extending rearward and upward; a pair of right and left sub-frames 16 connected to the pivot plates 14 and extending rearward and upward, with subframe rear end portions connected to rear end portions of the seat frames 15; and a down tube 17 extending rearward and downward from the head pipe 12. An engine 50 and a transmission 51 integrally provided in a rear portion of the engine 50 are mounted on the main frame 13, the pivot plates 14 and the down tube 17.

The motorcycle 10 includes a front fork 21 steerably supported on the head pipe 12, a front wheel WF rotatably supported on a lower end portion of the front fork 21, a steering handlebar 22 attached to an upper end portion of the front fork 21, swing arms 23 swingably supported on the pivot plates 14, a rear wheel WR rotatably supported on rear end portions of the swing arms 23, cushion units 24 connected to the swing arms 23 and to the sides of the seat frames 15, a headlight 26 and a meter 27 attached to the head pipe 12 through a front stay 25, a fuel tank 28 secured on an upper part of the main frame 13, and a rider seat 29 and a pillion passenger seat 30 provided on upper parts of the seat frames 15.

In Fig. 1, the reference numeral 31 designates a windscreen, 32 a front top cowl, 33 a front cowl, 34 a side cowl, 35 a rear cowl, 36 front turn indicators, 37 a front fender, 38 a tail light, 39 rear turn indicators, 40 a grab rail, 41 a rear fender, 42 a license plate, 43 a reflector, 44 main steps, and 45 pillion steps.

The engine 50 is a single-cylinder engine, and, as shown in Fig. 1, its outer structures include a crankcase 52, a cylinder block 53 attached on a front upper end portion of the crankcase 52, a cylinder head 54 attached on an upper end portion of the cylinder block 53, a cylinder head cover 55 for covering an upper opening of the cylinder head 54, an ACG (generator) cover 56 for covering an opening in a left side surface of the crankcase 52, and a clutch cover (not shown) for covering an opening in a right side surface of the crankcase 52.

As shown in Figs. 1 and 2, a throttle body 62 is connected through an intake pipe 61 to an intake port 54a formed in a rear portion of the cylinder head 54, and an air cleaner 64 is connected through a connecting tube 63 to a rear portion of the throttle body 62. These components form an intake passage for feeding air into a combustion chamber (not shown) in the engine 50. An injector 62a for injecting fuel into the intake passage (injecting fuel toward the intake port 54a in the present embodiment) is integrally provided on an upper portion of the throttle body 62. A muffler 66 is connected through an exhaust pipe 65 to an exhaust port (not shown) formed in a front portion of the cylinder head 54.

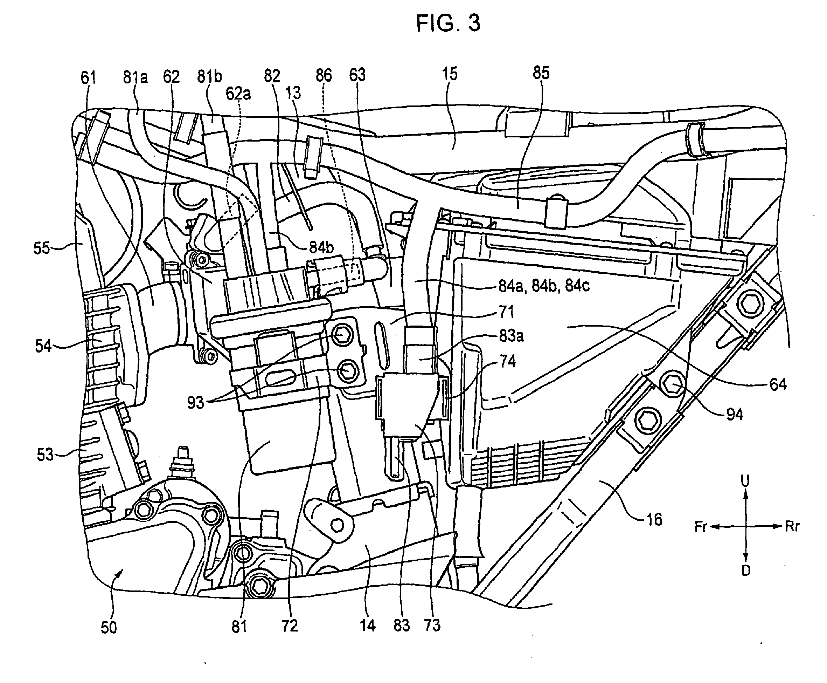

As shown in Figs. 2 to 5, the air cleaner 64 is fastened, with a bolt 91 and a nut 92, at its front portion to an air cleaner stay 71 welded on a left side surface of a rear portion of the main frame 13, and a fuel pump 81 for supplying fuel to the injector 62a on the throttle body 62 is fastened to a base portion of the air cleaner stay 71 with bolts 93, 93 through a fuel pump holder 72. The fuel pump 81 and the injector 62a are connected with a fuel supply hose 82 (fuel piping). The fuel pump 81 is provided, as a separate unit, outside the fuel tank 28. A rear portion of the air cleaner 64 is fastened to the right and left sub-frames 16 with bolts 94. In Fig. 3, the reference numeral 81a designates a fuel supply hose for supplying fuel from the fuel tank 28 to the fuel pump 81, and the numeral 81b designates a fuel return hose for returning fuel from the fuel pump 81 to the fuel tank 28.

Further, as shown in Figs. 2 to 6, a control unit (ECU) 83 for controlling the injector 62a and the fuel pump 81 is attached on a rear and lower portion of the air cleaner stay 71, such that a control unit holder 73 in which substantially the whole of the control unit 83 is fitted is inserted into a control unit stay 74, which is integrally formed on the rear and lower portion of the air cleaner stay 71 and is substantially U-shaped in plan view.

As shown in Figs. 2 to 5, the control unit 83 and the injector 62a are connected with wiring 84a, and the control unit 83 and the fuel pump 81 are connected with wiring 84b. Wiring 84c for other devices mounted on the motorcycle 10 (such as various sensors and lighting equipment for example) is also connected to the control unit 83. The wiring 84a, 84b, 84c are combined as one wire harness 85 which runs along the main frame 13 and the seat frames 15.

Further, in the present embodiment, as mentioned above, the fuel pump 81 and the control unit 83 are disposed on the left side of the body centre line CL by having the throttle body 62 connected to the rear portion of the cylinder head 54 and disposed on the right side of the body centre line CL, the fuel pump 81 attached to the air cleaner stay 71 through the fuel pump holder 72, and the control unit 83 attached to the air cleaner stay 71 through the control unit holder 73 and the control unit stay 74, and, as shown in Fig. 2, the injector 62a, the fuel pump 81, and the control unit 83 are disposed around the main frame 13 in such a manner as to surround the main frame 13. Thus, the fuel supply hose 82 connecting the injector 62a and the fuel pump 81 is shortened, and the wiring 84a, 84b connecting the control unit 83 to the injector 62a and the fuel pump 81 are shortened, thus reducing vehicle manufacturing cost and body weight.

In the present embodiment, as shown in Figs. 2 to 5, the control unit 83 has a coupler 83a to which the wiring 84a, 84b, 84c are connected, and is disposed so that an insertion opening for connection with the wiring of the coupler 83a faces upward and is on the top of the control unit 83. Thus, the wiring 84a, 84b can be further shortened. If the coupler 83a faces downward, the wiring passing above the control unit 83 must be connected to the coupler 83a after passing through the control unit 83 once and making a U-turn, which would correspondingly lengthen the wiring. The coupler 83a is provided with a water-proof coating.

In the present embodiment, as shown in Fig. 2, the control unit 83 is disposed opposite to the connecting tube 63 across the main frame 13 in the direction of width of the vehicle. Thus, the control unit 83 and the connecting tube 63 can be disposed compactly around the main frame 13. If the control unit 83 is disposed on the same side as the connecting tube 63, the control unit 83 or the connecting tube 63 must then be disposed far from the main frame 13 in the direction of the width of the vehicle, thus increasing vehicle width.

In the present embodiment, as shown in Figs. 2 to 5, a discharge portion 86 for discharging fuel to the injector 62a protrudes from an upper end portion of the fuel pump 81, and the control unit 83 is disposed in the direction in which the discharge portion 86 protrudes from the fuel pump 81 and in a position lower than the discharge portion 86. Thus, the fuel pump 81 and the control unit 83 can be disposed in close proximity to each other while the control unit 83 is provided in the direction in which the discharge portion 86 protrudes.

In the present embodiment, in a vehicle plan view, the throttle body 62 and the injector 62a are disposed on the right side of the vehicle body and the fuel pump 81 and the control unit 83 on the left side of the vehicle body, across the body centre line CL. Further, in the present embodiment, the above can be paraphrased that distribution to the right and left is implemented across the main frame 13.

In the present embodiment, as shown in Fig. 1, the fuel pump 81, the control unit 83, and the air cleaner 64 are covered by the side cowl 34.

As described above, in the motorcycle 10 according to the present embodiment, since the injector 62a, the fuel pump 81, and the control unit 83 are disposed around the main frame 13 in such a manner as to surround the main frame 13, the fuel supply hose 82 connecting the injector 62a and the fuel pump 81 can be shortened, and the wiring 84a, 84b connecting the control unit 83 to the injector 62a and the fuel pump 81 can be shortened, thus enabling reduction in manufacturing cost and body weight.

According to the present embodiment of the motorcycle 10, since the air cleaner 64 is connected through the connecting tube 63 to the rear portion of the throttle body 62 and the control unit 83 is disposed opposite to the connecting tube 63 across the main frame 13 in the vehicle width direction, the control unit 83 and the connecting tube 63 can be disposed compactly around the main frame 13.

According to the present embodiment of the motorcycle 10, since the discharge portion 86 for discharging fuel to the injector 62a protrudes from the upper end portion of the fuel pump 81 and the control unit 83 is disposed in the direction in which the discharge portion 86 protrudes from the fuel pump 81 and in a position lower than the discharge portion 86, the fuel pump 81 and the control unit 83 can be disposed in close proximity to each other while the control unit 83 is provided in the direction in which the discharge portion 86 protrudes.

According to present embodiment of the motorcycle 10, since the control unit 83 is attached to the air cleaner stay 71 provided on the main frame 13 and supporting the air cleaner 64, a supporting member is shared by the air cleaner 64 and the control unit 83. Thus, the number of parts can be reduced, thereby enabling reduction in vehicle manufacturing cost.

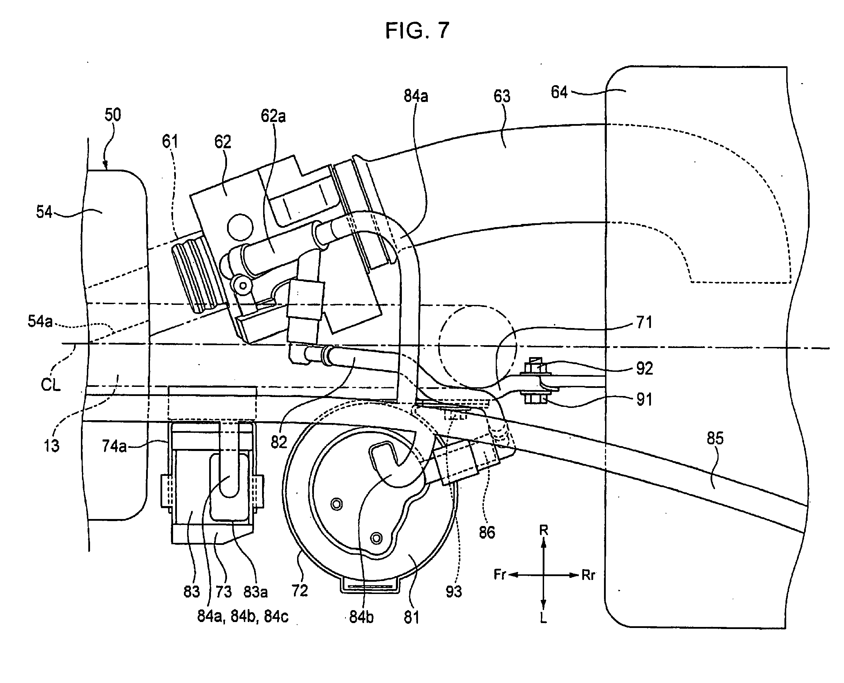

Next, referring to Fig. 7, a second embodiment of the motorcycle according to the present invention will be described. The same reference numerals are given to the same or equivalent components as the first embodiment, and the explanation thereof is simplified or omitted.

In the second embodiment, as shown in Fig. 7, the control unit 83 is supported on a control unit stay 74a provided in such a manner as to extend downward from a left side surface of a middle portion of the main frame 13.

Other configurations and working effects are the same as those in the first embodiment.

## Claims

1. A motorcycle (10) comprising:
a main frame (13) extending rearward and downward from a head pipe (12), wherein the main frame (13) is provided along a body centreline of the motorcycle (10), which passes through the centre in the direction of width of the motorcycle and extends in the longitudinal direction of the motorcycle body;
an engine (50) supported on the main frame (13);
a throttle body (62) connected to a rear portion of the engine (50) and having an injector (62a) for injecting fuel into an intake passage;
a fuel pump (81) provided outside a fuel tank (28); and
an air cleaner (64) connected through a connecting tube (63) to a rear portion of the throttle body (62);
**characterized in that** it further comprises a control unit (83) for controlling the injector (62a) and the fuel pump (81), wherein the injector (62a), the fuel pump (81), and the control unit (83) are disposed around the main frame (13) in such a manner as to surround the main frame (13); and
wherein the control unit (83) is disposed on an opposite side of the main frame (13) to the connecting tube (63) in the direction of the width of the vehicle.

2. The motorcycle according to Claim 1, wherein:
the fuel pump (81) has a discharge portion (86) for discharging fuel to the injector (62a) which protrudes from the fuel pump (81) in a particular direction; and
the control unit (83) is disposed in plan view along the direction in which the discharge portion (86) protrudes from the fuel pump (81) and in a position lower than the discharge portion (86).

3. The motorcycle (10) as claimed in claim 1,
wherein the injector (62a), the fuel pump (81), and the control unit (83) are disposed distributedly to right and left of the body centreline of the motorcycle across the main frame (13).

## Patentansprüche

1. Motorrad (10), umfassend:
einen Hauptrahmen (13), welcher sich nach hinten und nach unten von einem Lenkrohr (12) erstreckt, wobei der Hauptrahmen (13) entlang einer Körpermittellinie des Motorrads (10) bereitgestellt ist, welche durch die Mitte in die Breitenrichtung des Motorrads hindurch geht und sich in die Längsrichtung des Motorradkörpers erstreckt;
einen an dem Hauptrahmen (13) gehalten Motor (50);
ein Drosselklappengehäuse (62), welches mit einem hinteren Bereich des Motors (50) verbunden ist und eine Einspritzvorrichtung (62a) aufweist, zum Einspritzen von Kraftstoff in einen Einlassdurchgang;
eine außerhalb eines Kraftstofftanks (28) bereitgestellte Kraftstoffpumpe (81); und
einen Luftfilter (64), welcher mittels eines Verbindungsrohrs (63) mit einem hinteren Bereich des Drosselklappengehäuses (62) verbunden ist;
**dadurch gekennzeichnet, dass** es ferner eine Regelungs-/Steuerungseinheit (83) umfasst, zum Regeln/Steuern der Einspritzvorrichtung (62a) und der Kraftstoffpumpe (81), wobei die Einspritzvorrichtung (62a), die Kraftstoffpumpe (81) und die Regelungs-/Steuerungseinheit (83) um den Hauptrahmen (13) herum derart angeordnet sind, dass sie den Hauptrahmen (13) umgeben, und
wobei die Regelungs-/Steuerungseinheit (83) an einer dem Verbindungsrohr (63) gegenüberliegenden Seite des Hauptrahmens (13) in der Breitenrichtung des Fahrzeugs angeordnet ist.

2. Motorrad nach Anspruch 1, wobei:
die Kraftstoffpumpe (81) einen Abgabeabschnitt (86) zum Abgeben von Kraftstoff an der Einspritzvorrichtung (62a) aufweist, weicher von der Kraftstoffpumpe (81) in einer bestimmten Richtung vorsteht; und
die Regelungs-/Steuerungseinheit (83) in Draufsicht entlang der Richtung, in welcher der Abgabeabschnitt (86) von der Kraftstoffpumpe (81) vorsteht und an einer Position angeordnet ist, die unter dem Abgabeabschnitt (86) liegt.

3. Motorrad (10) nach Anspruch 1,
wobei die Einspritzvorrichtung (62a), die Kraftstoffpumpe (81) und die Regelungs-/Steuerungseinheit (83) rechts und links der Körpermittellinie des Motorrads über den Hauptrahmen (13) verteilt angeordnet sind.

## Revendications

1. Motocycle (10) comprenant :
un cadre principal (13) s'étendant vers l'arrière et vers le bas à partir d'un tuyau de tête (12), dans lequel le cadre principal (13) est disposé le long d'une ligne médiane de caisse du motocycle (10) qui passe par le centre dans la direction de la largeur du motocycle et s'étend dans la direction longitudinale de la caisse du motocycle ;
un moteur (50) supporté sur le cadre principal (13) ;
un corps de papillon des gaz (62) raccordé à une portion arrière du moteur (50) et comportant un injecteur (62a) pour injecter du carburant dans un passage d'admission ;
une pompe à carburant (81) disposée à l'extérieur d'un réservoir de carburant (28) ; et
un filtre à air (64) raccordé via un tube de raccordement (63) à une portion arrière du corps de papillon des gaz (62) ;
**caractérisé en ce qu'**il comprend en outre une unité de commande (83) pour commander l'injecteur (62a) et la pompe à carburant (81), dans lequel l'injecteur (62a), la pompe à carburant (81) et l'unité de commande (83) sont disposés autour du cadre principal (13) de manière à entourer le cadre principal (13) ; et
dans lequel l'unité de commande (83) est disposée sur un côté du cadre principal (13) opposé au tube de raccordement (63) dans la direction de la largeur du véhicule.

2. Motocycle selon la revendication 1, dans lequel :
la pompe à carburant (81) comporte une portion d'évacuation (86) pour évacuer le carburant dans l'injecteur (62a) qui dépasse de la pompe à carburant (81) dans une direction particulière ; et
l'unité de commande (83) est disposée dans une vue en plan le long de la direction dans laquelle la portion d'évacuation (86) dépasse de la pompe à carburant (81) et dans une position plus basse que la portion d'évacuation (86).

3. Motocycle (10) selon la revendication 1, dans lequel :
l'injecteur (62a), la pompe à carburant (81) et l'unité de commande (83) sont disposés de façon équilibrée à droite et à gauche de la ligne médiane de caisse du motocycle à travers le cadre principal (13).
